# EUROPEAN PATENT APPLICATION

(11) **EP 3 712 780 A1**
(43) Date of publication of application: **23.09.2020**
(21) Application number: 19315016.6
(22) Date of filing: 19.03.2019
(51) Int. Cl.: G06F 16/2458

(54) **STORING OBJECTS IN DATA STRUCTURES**

(71) Applicant: Hewlett-Packard Development Company, L.P., Spring, TX 77389 (US)
(72) Inventor: Connetable, Francois, 38053 Grenoble (FR); DEL Medico, Yves, 38053 Grenoble (FR); Moraes, Mauricio Coutinho, 90619-900 Porto Alegre (BR)
(74) Representative: Walaski, Jan Filip

(57) **Abstract**

A non-transitory machine-readable storage medium is described that determines whether an object can be stored in a most recently created bucket in a data structure based on a time window associated with the bucket, and if the object cannot be stored in the most recently created bucket, a new bucket is created to replace a bucket that is associated with an expired time window, and the object is stored in the new bucket.

## Description

### Background

Modern computer systems may handle objects with a finite life-time in the course of processing. Such systems may store and retrieve those objects from memory by encoding them into and decoding them from data structures, such as arrays, stacks, heaps, hash tables or linked lists.

### Brief Description of the Drawings

Figure 1 shows an example computer system according to the present disclosure.
Figure 2a shows an example of the data structure shown in Figure 1 before an object is stored.
Figure 2b shows an example of the data structure shown in Figure 1 after an object is stored.
Figure 3 shows an example method carried out by the computer system of Figure 1 for storing an object in a data structure comprising a plurality of buckets, according to the present disclosure.
Figure 4 shows another example of a method for storing an object in a data structure comprising a plurality of buckets.
Figure 5 shows an example of a method for storing an object in a data structure comprising two buckets.
Figure 6 shows an example method carried out by the computer system of Figure 1 for retrieving an object from a data structure comprising a plurality of buckets, according to the present disclosure.
Figure 7 shows another example of a method for retrieving an object from a data structure comprising a plurality of buckets.

### Detailed Description

Efficient use of computer resources, including memory, is a significant issue for all computer systems. Such issues increase in importance in systems that face high load during operation, such as high-performance server software, where the accumulation of objects created by the software can lead to congestion, memory shortages and ultimately server downtime.

In many systems, for example, highly concurrent server software environments such as enterprise micro-services based solutions, there is a need to store and share short lived objects such as user sessions across multiple processing threads. Such short-lived objects, also referred to as temporary objects, use valuable system resources, and require regular removal once obsolete to free up these resources.

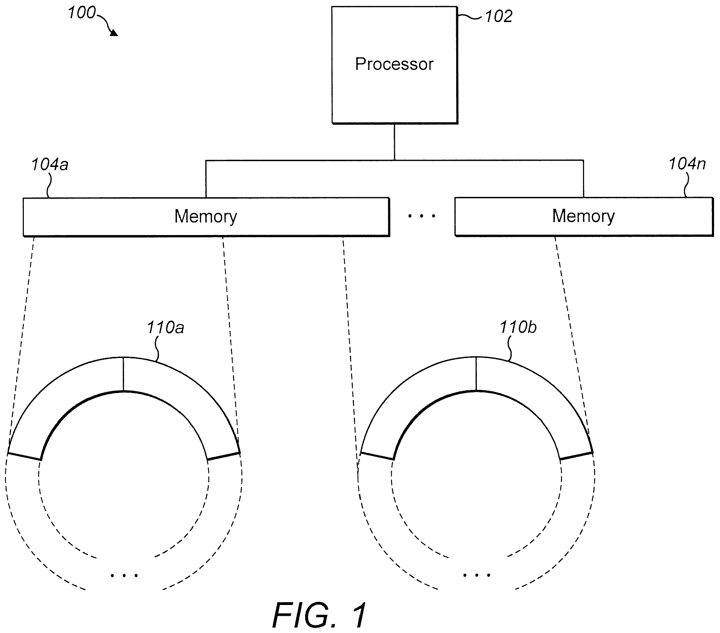

Figure 1 illustrates an example computer system 100. Computer system 100 comprises a processor 102 communicatively connected to at least one memory 104a-104n, such that the processor is able to write data to and read data from the at least one memory 104a-104n.

For example, processor 102 may comprise an arithmetic and logic unit, a field-programmable gate array, a cache memory or a read-only memory, among alternatives. The processor may be composed of several cores or may be distributed over several physical locations. The processor may be capable of supporting the concurrent execution of multiple threads. The at least one memory 104a-104n may include any electronic, magnetic, optical, or other physical storage device, and may comprise volatile memory devices such as SDRAM chips, or non-volatile memory such as a read-only memory, an optical disk, flash memory chips or magnetic disk storage devices, among alternatives. Furthermore, the at least one memory 104a-104n may encode executable instructions for execution by the processor 102. In some examples, processor 102 may be communicatively connected to the at least one memory 104a-104n via a communication component such as a system bus, a memory controller, or a wired or wireless network controller.

Computer system 100 maintains at least one data structure 110a, 110b in the memory 104a-n for storing objects. An object refers to any data or collection of data that is related to processing occurring in a computing system. The computer system may provide for writing (i.e. storing) and reading (i.e. retrieving) an object to and from the memory in accordance with the executable instructions stored in the at least one memory 104a-104n.

Temporary objects are objects which are associated with a finite life-span, for example in the form of a time-to-live, TTL, value. Once the age of the object gets past the TTL value, it is obsolete and can be removed from memory to free up server resources.

A user session is an example of a temporary object. Generally, a user session should remain in memory to keep track of a given user's activity and to speed up associated information retrieval, until an inactivity timeout is reached. A user session needs to be stored outside of single transaction processing threads, so that it survives the end of a transaction and is available to other transaction threads.

Another example is a cache of recently accessed objects, loaded from high latency stores such as distant databases or system. Cross-server caches enable reuse across different client transaction processing threads. Addition of a time-bomb on each cache line ensures that objects gets refreshed regularly from their originating store where they might be updated over time. The time-bomb is expressed as the date and time when the line was fetched from the remote server, increased by a specific "time to live", generally defined as the mean time between updates in the remote store. Each time the cache line is read, the current date and time is compared to the time-bomb. If the time-bomb is older than current date and time, the cache line is considered obsolete and is removed. The obsoleted object stored in the cache line must be fetched again from the remote server.

A third example is a record of client activities over the near past (time bounded). This is used to identify patterns such as denial-of-service attacks or brute force attacks on secrets made by clients conducting many parallel or sequential transactions against the server.

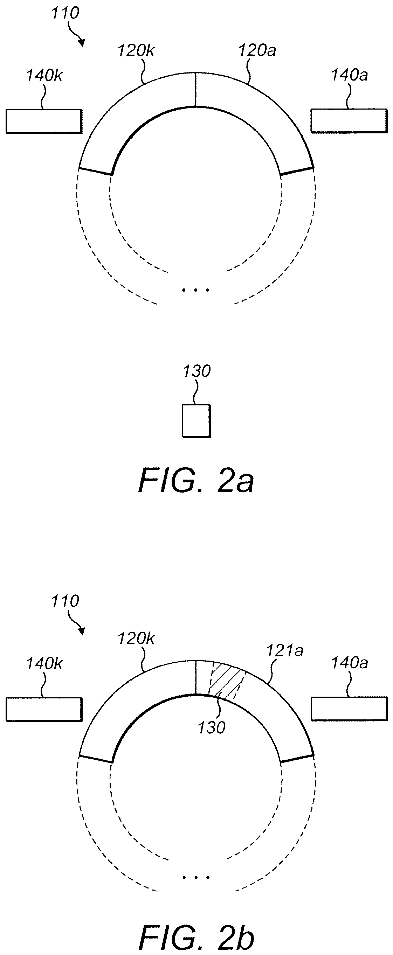

Figure 2a shows an example of the data structure 110a, 110b shown in Figure 1 and generically referred to as data structure 110. The data structure 110 comprises a plurality of buckets 120a-120k in which objects 130 can be stored. Each data structure 110 may store temporary objects of the same type, for example objects which have the same TTL.

The number of buckets within a data structure is denoted *k,* where *k* is greater than or equal to 2. A bucket is an area in memory to which a plurality of objects may be written, i.e. stored and from which objects may be read, i.e. retrieved. For example, a bucket may be an area of memory which encodes a data structure that is capable of efficiently writing and reading a plurality of objects, such as an array, hash table, linked list, heap, binary tree or stack data structure. As shown in Figure 1, the data structures 110a, 110b may be comprised within the same memory 104a, or alternatively, may be distributed across more than one of the memories 104a-104n.

A bucket 120a-120k may be created by, for example, allocating an area of memory in the at least one computer-readable memory 104a-104n.

Each bucket may be uniquely identified among the *k* buckets by a number between 0 and *k* - 1 inclusive, called the index corresponding to that bucket. For example, it is possible to identify a "1^{st} bucket", a "2^{nd} bucket", all the way to a "*k*^{th} bucket", and assign index *i* - 1 to the *i*^{th} bucket. These indices may be assigned arbitrarily when creating the buckets.

In addition, each bucket 120a-120k is associated with a time window 140a-140k, during which it is possible to write objects to the bucket. Each time window is defined by its start time and its duration. The time windows may be chosen such that they do not overlap, so that at any given time, a unique time window can be identified. Furthermore, the time windows associated with the buckets of a data structure may all be of the same window length *I.* The time windows 140a-140k may start and end at regular times. For example, the starting times of time windows 140a-140k may all correspond to timestamps that are integer multiples of the time window length. A timestamp, also called the system time corresponding to a particular instant, may be retrieved from a computer system clock. For example, Unix timestamps, defined as the number of seconds since 1 January 1970 at 12:00:00am - which is called the Unix epoch, available at https://www.epochconverter.com - may form a convenient reference. Thus, given a window length of 10 minutes, the regular times fall every 10 minutes after midnight on 1 January 1970. In another example, given a window length of 1 minute, the time windows may all start on the minute and last exactly one minute, or given a window length of 1 hour, the time windows may all start on the hour and last exactly one hour (i.e. *l* = 3600 seconds).

Furthermore, it may be the case that at any one time, the start time of any time window lies in the past, and the time windows may be ordered identically to the creation times of the buckets. For example, each time window 140a-140k may include the creation time of its corresponding bucket 120a-120k.

A time window 140a-140k may be said to be *expired* when the time elapsed since the end of the associated time window 140a-140k exceeds the time-to-live of temporary objects stored in the bucket.

The lengths of the time windows 140a-140k may be set based on the time-to-live duration of temporary objects that are expected to be stored. In particular, denoting the time-to-live duration of the temporary objects expected to be stored as *TTL,* the time window lengths may be set to *l* = *TTL* / (*k* - 1). As a result, when any time window ends, the earliest time window of all the buckets will have started at least *l* ^{∗} *k* time in the past and ended at least *l* ^{∗} *(k* - 1) = *TTL* time in the past. As a result, when any time window ends, there is at least one bucket in which all the objects have been stored for at least their time-to-live, that is, a bucket whose time window is expired.

In particular, if the number of buckets is two, then the time windows may be set to have a length equal to the time-to-live *TTL* of the temporary objects expected to be stored.

Processor 102 may represent each time window 140a-140k by a time window identifier, which is an integer number encoding its start time. In particular, the time window identifier may be the timestamp or system time corresponding to its start time divided by the window length *l*, where integer division is used for the division. Conversely, given a computer system clock and a window length *l*, a time window identifier number uniquely defines a time window. For example, given a reference time of 1 January 1970 at 12:00am, a given identifier uniquely defines a time window that starts at *reference time* + *identifier* ^{∗} *l* and ends at *reference time* + *identifier* ^{∗} (*l* + 1). Thus, the time window associated with a bucket may be defined implicitly by a time window identifier associated with the bucket. For example, for the time windows to start on the minute and last exactly one minute, a time window's identifier may be set to the system time corresponding to its start time, measured in seconds, divided by 60.

Whether a bucket has expired may then be easily determined given its time window identifier: a bucket has expired when its identifier is less than or equal to (*current time* / *l*) - *k.*

Furthermore, the time window identifiers corresponding to buckets 120a-120k may satisfy the property that for any bucket, its identifier is congruent to its index modulo *k.* This property may be ensured by choosing each bucket's time window identifier to be congruent to its index modulo *k* at initialisation, and by preserving the property by each time a bucket is newly created, as described in further detail below.

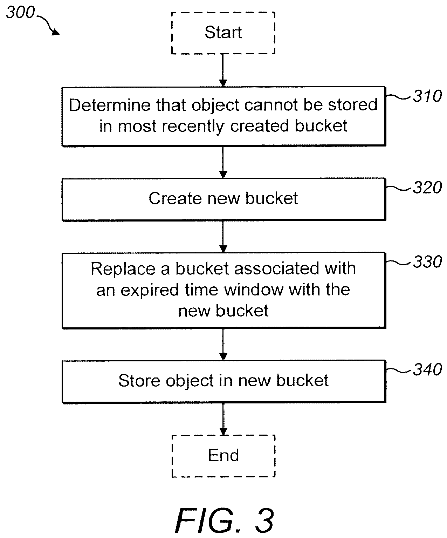

Figure 3 illustrates an example method 300 carried out by computer system 100 for storing an object 130 in a data structure 110, with reference to Figure 2b.

At block 310, processor 102 determines whether an object 130 can be stored in a most recently created bucket 120k, in dependence on the time window 140k associated with the most recently created bucket 120k.

At block 320, if the object cannot be stored in the most recently created bucket, a new bucket 121a is created, as shown in Figure 2b.

At block 330, processor 102 replaces a bucket 120a with an expired time window with the new bucket 121a.

At block 340, processor 102 stores the object 130 in the new bucket 121a.

Method 300 may provide for the efficient removal of expired temporary objects as expired buckets are replaced, while ensuring that non-expired temporary objects are preserved for later retrieval. In particular, it may be the case that the computational cost of cleaning up the expired temporary objects contained in the previously selected bucket 310a does not depend on the total size of the expired temporary objects. Thus, compared to some processes for cleaning up expired temporary objects, where objects may be inspected one by one, method 200 may save computational resources. Furthermore, the new bucket 121a may be created without using additional memory, and if the area of memory allocated to the new bucket 121a is the same as that allocated to the expired bucket 120a, the new bucket 121a may be created without the computational cost of finding an unused area of memory to allocate.

In addition, buckets 120a-120k are properly maintained by method 300 and may not use additional garbage collection processes. In particular, blocks 320-340 may provide that it is not necessary to create a new bucket and replace an expired bucket apart from when an object is received to be stored.

Furthermore, method 300 may alleviate synchronisation issues at time window boundaries. Indeed, when a given thread starts a write operation, if it finds out at block 310 that the most recently created bucket may be written to, the thread writes to the most recently created bucket. It may happen that the operation starts just before the boundary of a time window, and ends up after that boundary. Since method 300 ensures that a bucket does not need to be moved from one area of memory to another when its time window ends, a write operation can occur safely across the time window boundary with no need for synchronisation primitives.

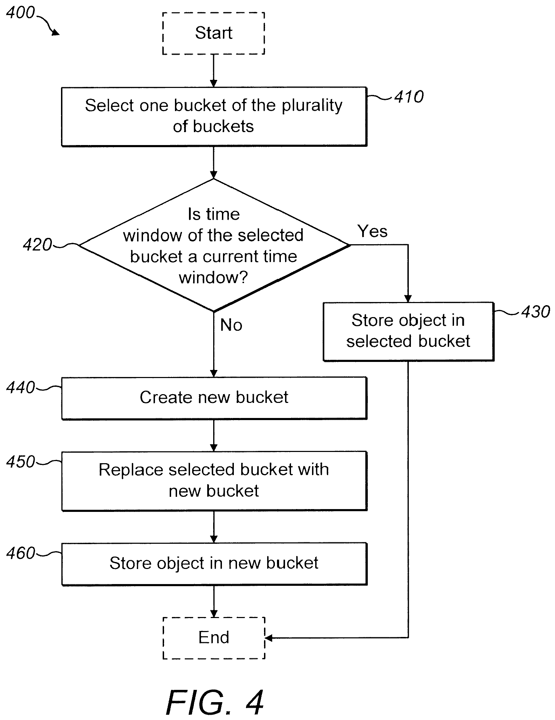

Figure 4 shows another example of a method for storing an object 130 in a data structure 110 comprising a plurality of buckets 120a-120k.

Object 130 may for instance be an object generated by processor 120 as a result of an event, such as a request from a client device. Furthermore, object 130 may be a temporary object. For example, object 130 may be a user session identifier that is created as a result of a request from a client that was previously not logged in.

At block 410, processor 102 selects one bucket of the plurality of buckets. Without loss of generality, referring to Figure 2a, the bucket selected at block 410 is denoted as bucket 120a, with associated time window 140a. For example, processor 102 may calculate a current time window identifier and select a bucket 120a whose time window identifier is congruent to the current time window identifier modulo *k* - that is, if the difference between the time window identifier of bucket 120a and the current time window identifier is divisible by *k.* For example, two numbers are congruent modulo 2 if they are both even or both odd, so if *k* is equal to 2, processor 102 may select a bucket 120a whose time window identifier has the same parity as the current time window identifier.

The current time window identifier may be the current system time divided by the time window length *l*, where integer division is used. For example, the current time window identifier may be calculated as the integer part of (*current system time in seconds* / *l*). In some computer systems, the current system time may give the number of seconds since a reference time such as the Unix epoch, 1 January 1970 at 12:00 am.

Since the time window length may be based on the time-to-live *TTL* of objects to be stored, for example, the time window length may be set as *l* = *TTL* / (*k -* 1), the current time window identifier may be calculated as the integer part of (*current system time in seconds* ^{∗} (*k* - 1) / *TTL*)*.*

For example, if the number of buckets is two, the time window length *l* may be set equal to the time-to-live of objects *TTL.* In this case, the current time window identifier may be calculated as the integer part of (*current system time in seconds* / *TTL*).

If the number of buckets is three, the time window length *l* may be set to be *TTL* / 2. In this case, the current time window identifier may be calculated as the integer part of (*current system time in seconds* ^{∗} 2 / *TTL*)*.*

Processor 102 may identify a bucket whose time window identifier is congruent to the current time window identifier modulo *k* by calculating the result of *current time window identifier* modulo *k.* This allows a unique bucket to be identified, because the result of *current time window identifier* modulo *k* is an integer between 0 and *k* - 1, and a unique bucket may be identified by an index between 0 and *k* - 1. Processor 102 may then select the bucket identified by the result of *current time window identifier* modulo *k* according to the index.

Given that each bucket's time window identifier is congruent to its index modulo *k,* it follows that the selected bucket's identifier is congruent to the current time window identifier modulo *k.* Hence, either the selected bucket's time window identifier is equal to the current time window identifier, or the difference between the selected bucket's time window identifier and the current time window identifier is greater than or equal to *k.*

Because the bucket that is selected depends on the current time, it is possible for several processes to access the buckets concurrently without sharing or replicating additional state between the several processes, which may ensure throughput in highly concurrent environments.

Furthermore, a bucket may be selected in one integer division and one modulo operation, which may ensure that the computational cost of a write remains low. Notably, using a modulo *k* operation means that it may not be necessary to keep track of the selected bucket between writes (which would limit concurrency) nor to compare time windows with each other (which would be computationally costly) in order to determine the selected bucket.

At block 420, processor 102 determines whether the time window 140a of the selected bucket 120a is a current time window, in order to determine whether object 130 can be stored in a most recently created one of the plurality of buckets.

In particular, processor 102 may determine whether the time window 140a is a current time window by comparing the current time window identifier with the time window identifier of bucket 120a: if the current time window identifier is equal to the time window identifier of bucket 120a, then the current time is comprised within time window 140a.

Therefore, processor 102 may determine whether the current time is comprised within time window 140a, in one integer division and one equality comparison, which may ensure a low computational cost per write.

If it is determined at block 420 that the time window 140a of the selected bucket 120a is a current time window, object 130 can be stored in the selected bucket 120a; method 400 therefore advances to block 430.

Otherwise, object 130 cannot be stored in the selected bucket, and therefore can also not be stored in a most recently created one of the plurality of buckets. Moreover, given that the time window identifier of the selected bucket 120a is congruent to the current time window identifier modulo *k,* the time window identifier of bucket 120a and the current time window identifier are two non-equal integers which are congruent modulo *k.* Hence, their difference is greater than or equal to *k.* It follows that the time window identifier of bucket 120a is less than *current time window identifier* - *k*, which means that the selected bucket 120a is expired. As a result, selected bucket 120a may be discarded: method 400 therefore advances to blocks 440-460.

At block 430, processor 102 stores the object 130 in the selected bucket 120a. For example, processor 102 may write the object 130 in an area of memory allocated to the selected bucket 120a, or insert the object 130 in a data structure encoded by the area of memory allocated to the selected bucket 120a, such as an array, hash table, linked list, heap, binary tree or stack data structure.

At block 440, processor 102 creates a new bucket 121a. For instance, processor 102 may allocate an area of memory to a new bucket 121a, and initialise an empty data structure in the allocated memory. In particular, processor 102 may allocate a minimal amount of memory and then write an empty data structure in the allocated memory.

At block 450, processor 102 replaces the selected bucket 120a with the new bucket 121a. Since the selected bucket 120a is expired, it follows that no information that is not obsolete is discarded when the selected bucket 120a is replaced. Processor 102 may replace the selected bucket 120a with the new bucket 121a in the same operation as creating the new bucket 121a. In particular, an area of memory allocated to the new bucket at block 440 may be the same as an area of memory allocated to the bucket having an expired time window. In this way, the expired bucket 120a and the objects it contains are replaced automatically as a side effect of creating the new bucket 121a, such that replacing the expired bucket 120a is not a separate process.

Processor 102 may assign a time window 321a to the new bucket 121a based on the current time at the creation of the selected bucket. For example, the time window 321a may be such that the system time value at the time of creation of the selected bucket is comprised within the time window 321a. In particular, the current time window identifier may be assigned as the new bucket's time window identifier. In this way, the property that for any bucket, its identifier is congruent to its index modulo *k* can be preserved.

Furthermore, the new bucket 121a may be identified by the same index as the bucket 120a it replaces. In particular, if the data structure 110 is an indexed data structure where each index corresponds to a bucket, the area of memory corresponding to the new bucket 121a may be allocated at the indexed position within the data structure 110 corresponding to the calculated index.

At block 460, processor 102 stores the object 130 in the new bucket 121a. For example, processor 102 may insert the object 130 in a data structure encoded by the area of memory allocated to the new bucket 121a, such as an array, hash table, linked list, heap, binary tree or stack data structure.

Method 400 therefore may ensure that any object that is stored by processor 102 in the data structure 110 remains available for retrieval during at least its time-to-live.

Moreover, under busy loads, method 400 may have the property that no object is retained longer than the combined length of all the time windows. For example, given that the time window lengths are set to *l* = *TTL* / (*k* - 1), it may be the case that no object is retained for longer than *k* ^{∗} *l* = *TTL* ^{∗} *k* / (*k* - 1). Hence, a larger value for the number of buckets *k* will cause expired temporary objects to be discarded sooner after they expire, thus freeing unusable memory more proactively. The value of *k* may be thus chosen according to the memory constraints of the computer system 100.

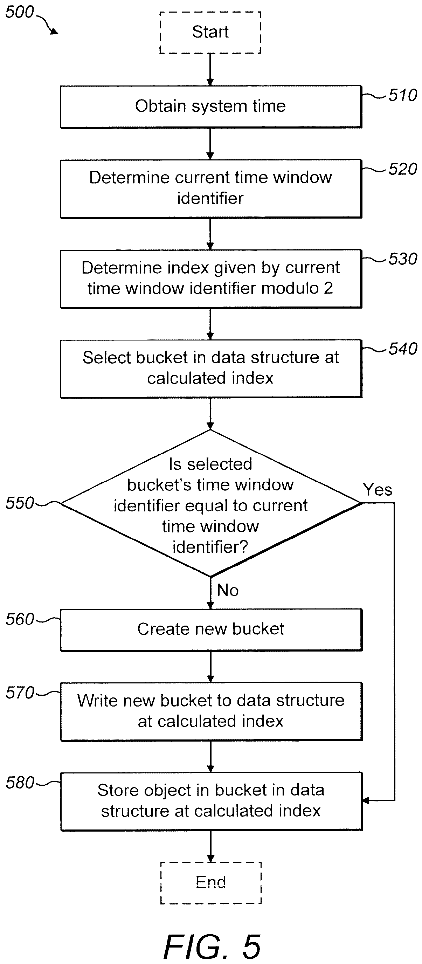

Figure 5 shows an example of a method for storing an object 130 in a data structure 110 comprising two buckets.

At block 510, processor 102 obtains the system time. For example, the system time may give the number of seconds elapsed since January 1, 1970 at 12:00:00 am.

At block 520, processor 102 determines a current time window identifier given by the system time divided by a time-to-live duration, where integer division is used. In particular, all the objects stored in the data structure 110 maybe temporary objects with the same time-to-live duration. That common time-to-live duration may then be used for determining the current time window identifier.

At block 530, processor 102 determines an index given by the current time window identifier modulo 2. Thus the determined index is either zero or one.

At block 540, processor 102 selects the bucket 120a at the calculated index.

At block 550, processor 102 determines whether the time window identifier of the selected bucket 120a is equal to the current time window identifier. If so, the selected bucket 120a is a most recently created bucket and the object 130 may be stored in the selected bucket 120a, and method 500 advances directly to block 580. Otherwise, the selected bucket 120a is expired, and method 500 advances to blocks 560 through 580.

At block 560, processor 102 creates a new bucket 121a. For example, processor 102 may initialise a new data structure in an area of memory allocated to the new bucket 121a.

At block 570, processor 102 writes the new bucket 121a to the data structure 110 at the calculated index. For example, processor 102 may replace the bucket 120a at the calculated index with the new bucket 121a.

At block 580, processor 102 stores the object 130 in the bucket at the calculated index of the data structure 110.

As a result, if the most recently created bucket can be written to, then a single storing operation according to method 500 may use one integer division, one modulo operation and one integer equality comparison, besides the cost of storing the object 130 in a bucket. If the most recently created bucket cannot be written to, i.e. because the current time does not fall within the time window of the most recently created bucket, then a single storing operation according to method 500 may use one integer division, one modulo operation, one integer equality comparison and the cost of initialising a new bucket in an area of memory previously occupied by the previous bucket. This relatively low computational cost may make method 500 particularly attractive in settings where high performance storage of temporary objects is desirable.

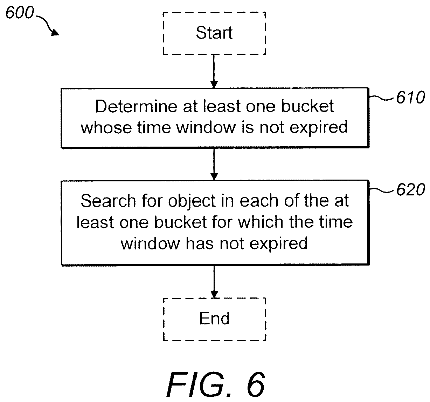

Figure 6 shows a method 600 carried out by computer system 100 for retrieving an object from a data structure 110 comprising a plurality of buckets 120a-120k.

At block 610, processor 102 determines at least one bucket whose time window has not expired.

At block 620, processor 102 searches for the object to be retrieved in each of the at least one bucket for which the time window has not expired.

Compared to directly storing and retrieving objects in an area of memory, method 300 and method 600 of storing and retrieving objects in a data structure 110 comprising a plurality of buckets thus may have at least the following computational and memory benefits. Firstly, it may not be necessary to inspect objects individually to determine whether they are expired temporary objects. Secondly, non-expired objects are not deallocated. Thirdly, expired temporary objects are deallocated within the duration of a time window after they expire at times of peak load. However, these advantages may come at a computational cost in method 600 of searching k buckets for the object to be retrieved, rather than a single area of memory, though each searched bucket may be smaller than the single area of memory that would be required. This trade-off may be beneficial in a computer system where read operations to memory are not costly and efficient memory housekeeping matters the most, such as in a microservices environment.

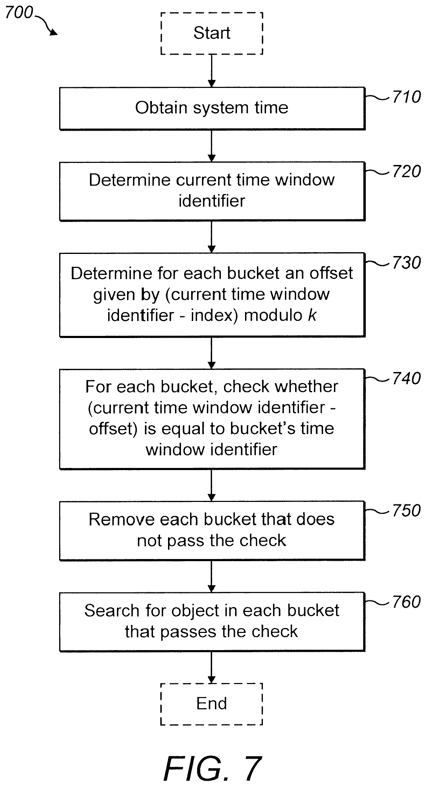

Figure 7 shows another example of a method for retrieving an object from a data structure comprising a plurality of buckets.

At block 710, processor 102 obtains the system time. For example, the system time may give the number of seconds elapsed since January 1, 1970 at 12:00:00 am.

At block 720, processor 102 determines a current time window identifier given by the system time divided by a time window duration, where integer division is used. In particular, given that the objects stored in the data structure 110 may be temporary objects with time-to-live duration *TTL,* the time window duration may be given by *TTL* / (*k* - 1) where *k* is the number of buckets. For example, if there are two buckets, the time window duration may be equal to *TTL,* so that processor 102 determines the current time window identifier as *system time* / *TTL.*

At block 730, processor 102 determines an offset for each bucket, where the offset is given by (*current time window identifier* - *index of bucket*) modulo *k,* that is, the remainder in the division of *current time window identifier* - *index of bucket* in the integer division by *k.*

In particular, in the case where *k* is equal to two, the offset of a bucket is equal to its index if the current time window identifier is even, and is equal to its index + 1 modulo 2 if the current time window identifier is odd. Therefore, the offset of the bucket with index equal to the current time window identifier modulo 2 is 0, and the offset of the other bucket is 1. Thus, to implement block 730, processor 102 may determine an index given by *current time window identifier* modulo 2 and set the offset of the bucket with that index equal to zero, and the offset of the other bucket to one.

At block 740, processor 102 checks, for each bucket, whether *current time window identifier* - *offset of bucket* is equal to *time window identifier of the bucket.*

A bucket is expired if it does not pass the above condition.

In particular, if there are two buckets, processor 102 may check that the time window identifier of the bucket with index equal to *current time window identifier* modulo 2 is equal to the current time window identifier, and processor 102 may check that the time window identifier of the other bucket is equal to the current time window identifier minus one.

In this way, processor 102 may identify the buckets for which the time window has not expired.

Processor 102 may designate any bucket whose time window has expired as empty, for example by allocating a value to the bucket indicating that it is empty.

At block 750, processor 102 removes each bucket that does not pass the check. For example, processor 102 may free the memory corresponding to the buckets which have been designated as empty, so that memory occupied by expired temporary objects may be freed. In this way, expired buckets are removed from the data structure and do not need to be searched for the object to be retrieved.

At block 760, processor 102 searches for the object to be retrieved in each bucket that does pass the check. For example, processor 102 may start its search at the bucket with the most recent window and work its way backwards through the non-expired buckets in order of index, returning the retrieved object and stopping the search as soon as an instance of the object is found. If the object is not found in any of the buckets with a non-expired time window, processor 102 may return an indication that a non-expired object corresponding to the object to be retrieved could not be found.

Because processor 102 skips expired buckets, any retrieved object is either non-expired, or has been expired for at most the duration of the time window of the bucket it has been retrieved from. Method 700 may therefore provide a guarantee that the object has not been expired for longer than the duration of a time window. Such a guarantee may be useful in applications where it is sufficient to ensure that a temporary object expires when a time approximately equal to its time-to-live has elapsed since its creation. For example, it may be sufficient to guarantee that a cache entry expires, at the latest, a time window length after its creation. Such a guarantee may avoid a further timestamp comparison in the application handling the retrieved temporary object, thereby further speeding up processing. Conversely, if there is no need for such a guarantee nor for the memory advantages of proactively deallocating expired buckets, blocks 710-750 may be skipped altogether.

Thus, retrieving a single object from data structure 110 using method 700 may use 2*k* subtractions, *k* modulo-*k* operations and *k* integer comparisons, in addition to the computational cost of searching for the object in at most *k* buckets. In the case where the number of buckets is 2, the computational cost may be reduced as described above to one modulo-2 operation (i.e. a parity check), one integer subtraction and two integer comparisons, in addition to searching for the object in at most 2 buckets. Furthermore, if blocks 710-750 are dispensed with, the computational cost of retrieving an object is reduced to that of searching in *k* buckets.

It may be desirable to keep some temporary objects in memory based on their last accessed time. For example, a user session may be kept in memory until the time elapsed since its last access time exceeds its time-to-live duration. For such a temporary object, method 700 may reset its creation timestamp as soon as it is accessed, by storing the temporary object again in the data structure 110 every time the object is retrieved. For instance, at block 760, if the retrieved temporary object expires based on its time of creation, the temporary object may be stored again in the data structure 110, for example by using method 300. In this way, an instance of the temporary object will be available for retrieval for at least the time-to-live after accessing the temporary object at block 420.

## Claims

1. A non-transitory machine-readable storage medium encoded with instructions that, when executed, cause at least one processor that has access to a data structure comprising a plurality of buckets, in which each bucket is associated with a time window, to:
determine whether an object can be stored in a most recently created one of the plurality of buckets in dependence on the time window associated with the most recently created bucket; and
based on determining that the object cannot be stored in the most recently created bucket:
create a new bucket;
replace a bucket that is associated with an expired time window with the new bucket; and
store the object in the new bucket.

2. The non-transitory machine-readable storage medium of claim 1, wherein the time window associated with each bucket has a duration that is dependent on a time to live value, TTL, of objects to be stored in the bucket.

3. The non-transitory machine-readable storage medium of claim 2, wherein the bucket associated with an expired time window stores objects for which the time elapsed since the object was created is greater than the TTL.

4. The non-transitory machine-readable storage medium of claim 1, wherein the instructions, when executed, further cause the at least one processor to store the object in the most recently created bucket based on determining that the object can be stored in the most recently created bucket.

5. The non-transitory machine-readable storage medium of claim 1, wherein the determining whether an object can be stored in the most recently created bucket comprises determining whether the time window associated with the most recently created bucket is a current time window.

6. The non-transitory machine-readable storage medium of claim 5, wherein the instructions, when executed, cause the at least one processor to:
store the object into the most recently created bucket based on the time window associated with the most recently created bucket being a current time window, , and
create a new bucket into which to store the object based on the time window associated with the most recently created bucket being a time window that precedes a current time window.

7. The non-transitory machine-readable storage medium of claim 5, wherein the determining whether the time window associated with the most recently created bucket is a current time window comprises comparing a first window identifier of the time window associated with a selected bucket, with a second window identifier of the current time window, wherein the first window identifier is based on a first system time value at the time of creation of the selected bucket, and the second window identifier is based on a second system time value representing the current time.

8. The non-transitory machine-readable storage medium of claim 7, wherein the instructions, when executed, cause the at least one processor to calculate the first and second window identifiers by taking the integer result of the division of the first and second system time values respectively, by a time window length, based on a time to live, TTL, of objects to be stored in the data structure.

9. The non-transitory machine-readable storage medium of claim 1, wherein the creating a new bucket comprises allocating an area of memory to the new bucket in dependence on a current time window identifier that represents a current time window.

10. The non-transitory machine-readable storage medium of claim 9, wherein the area of memory allocated to the new bucket is the same as an area of memory allocated to a bucket having an expired time window.

11. The non-transitory machine-readable storage medium of claim 9, wherein the instructions, when executed, cause the at least one processor to allocate the memory at an index position within the data structure, and calculate the index position as:
the current time window identifier MODULO n,
where n is the number of buckets.

12. A non-transitory machine-readable storage medium encoded with instructions that, when executed, cause at least one processor that has access to a data structure comprising a plurality of buckets, in which each bucket is associated with a time window that is represented by a time window identifier, to:
determine at least one bucket for which the time window has not expired; and
search for the object in each of the at least one bucket for which the time window has not expired.

13. The non-transitory machine-readable storage medium of claim 12, wherein the instructions, when executed, cause the at least one processor to allocate a value indicating that a bucket is empty to each bucket that is associated with an expired time window, and search for an object only in a bucket that is not allocated a value that indicates that it is empty.

14. The non-transitory machine-readable storage medium of claim 12, wherein the instructions, when executed, further cause the at least on processor to retrieve an object, and where the object is an object that is to be retained in the data structure for longer than a time to live, TTL, associated with the objects in the data structure, write the object to a bucket associated with a current time window.

15. A computer system comprising:
at least one processor that has access to a data structure comprising a plurality of buckets, in which each bucket is associated with a time window; and
at least one memory comprising instructions that when executed, cause the at least one processor to:
determine whether an object can be stored in a most recently created one of the plurality of buckets in dependence on the time window associated with the most recently created bucket; and
based on determining that the object cannot be stored in the most recently created bucket:
create a new bucket;
replace a bucket that is associated with an expired time window with the new bucket; and
store the object in the new bucket.

## Amended claims

### Amended claims in accordance with Rule 137(2) EPC.

1. A non-transitory machine-readable storage medium encoded with instructions that, when executed, cause at least one processor that has access to a data structure comprising a plurality of buckets, in which each bucket is associated with a time window, to:
determine whether an object can be stored in a most recently created one of the plurality of buckets in dependence on the time window associated with the most recently created bucket; and
based on determining that the object cannot be stored in the most recently created bucket:
create a new bucket;
replace a bucket that is associated with an expired time window with the new bucket; and
store the object in the new bucket.

2. The non-transitory machine-readable storage medium of claim 1, wherein the time window associated with each bucket has a duration that is dependent on a time to live value, TTL, of objects to be stored in the bucket.

3. The non-transitory machine-readable storage medium of claim 2, wherein the bucket associated with an expired time window stores objects for which the time elapsed since the object was created is greater than the TTL.

4. The non-transitory machine-readable storage medium of claim 1, wherein the instructions, when executed, further cause the at least one processor to store the object in the most recently created bucket based on determining that the object can be stored in the most recently created bucket.

5. The non-transitory machine-readable storage medium of claim 1, wherein the determining whether an object can be stored in the most recently created bucket comprises determining whether the time window associated with the most recently created bucket is a current time window.

6. The non-transitory machine-readable storage medium of claim 5, wherein the instructions, when executed, cause the at least one processor to:
store the object in the most recently created bucket based on the time window associated with the most recently created bucket being a current time window, and
create the new bucket in which to store the object based on the time window associated with the most recently created bucket being a time window that precedes a current time window.

7. The non-transitory machine-readable storage medium of claim 5, wherein the determining whether the time window associated with the most recently created bucket is a current time window comprises comparing a first window identifier of the time window associated with the most recently created bucket, with a second window identifier of the current time window, wherein the first window identifier is based on a first system time value at the time of creation of the selected bucket, and the second window identifier is based on a second system time value representing the current time.

8. The non-transitory machine-readable storage medium of claim 7, wherein the instructions, when executed, cause the at least one processor to calculate the first and second window identifiers by taking the integer result of the division of the first and second system time values respectively, by a time window length, based on a time to live, TTL, of objects to be stored in the data structure.

9. The non-transitory machine-readable storage medium of claim 1, wherein the creating a new bucket comprises allocating an area of memory to the new bucket in dependence on a current time window identifier that represents a current time window.

10. The non-transitory machine-readable storage medium of claim 9, wherein the area of memory allocated to the new bucket is the same as an area of memory allocated to a bucket having an expired time window.

11. The non-transitory machine-readable storage medium of claim 9, wherein the instructions, when executed, cause the at least one processor to allocate the memory at an index position within the data structure, and calculate the index position as:
the current time window identifier MODULO n,
where n is the number of buckets.

12. A non-transitory machine-readable storage medium encoded with instructions that, when executed, cause at least one processor that has access to a data structure comprising a plurality of buckets, in which each bucket is associated with a time window that is represented by a time window identifier, to:
determine at least one bucket for which the time window has not expired;
allocate a value indicating that a bucket is empty to each bucket that is associated with an expired time window; and
search for an object only in a bucket that is not allocated a value that indicates that it is empty.

13. The non-transitory machine-readable storage medium of claim 12, wherein the instructions, when executed, further cause the at least on processor to retrieve an object, and where the object is an object that is to be retained in the data structure for longer than a time to live, TTL, associated with the objects in the data structure, write the object to a bucket associated with a current time window.

14. A computer system comprising:
at least one processor that has access to a data structure comprising a plurality of buckets, in which each bucket is associated with a time window; and
at least one memory comprising instructions that when executed, cause the at least one processor to:
determine whether an object can be stored in a most recently created one of the plurality of buckets in dependence on the time window associated with the most recently created bucket; and
based on determining that the object cannot be stored in the most recently created bucket:
create a new bucket;
replace a bucket that is associated with an expired time window with the new bucket; and
store the object in the new bucket.
